# FASCICULE DE BREVET EUROPEEN

(11) **EP 1 134 954 B1**
(45) Date de publication et mention de la délivrance du brevet: **20.12.2006**
(21) Numéro de dépôt: 01400640.7
(22) Date de dépôt: 12.03.2001
(51) Int. Cl.: H04L 29/06, H04Q 11/04

(54) **Système de télécommunication dans lequel chaque terminal comporte plusieurs connexions**
Telekommunikationssystem wobei jedes Endgerät mehrere Verbindungen aufweist
Telecommunication system where each terminal comprises several connections

(30) Priorité: 16.03.2000 FR 0003370
(43) Date de publication de la demande: 19.09.2001
(73) Titulaire: ALCATEL, 75008 Paris (FR)
(72) Inventeur: Lapaille, Cédric, 78400 Chatou (FR); Bourriaud, Francis, 91160 Longjumeau (FR); Parmentier, Pierre, 91400 Saclay (FR); Gerrier, Christophe, 92270 Bois-Colombes (FR)
(74) Mandataire: Hedarchet, Stéphane

(56) Documents cités:
- EP-A- 0 774 848
- WO-A-99/44379
- US-A- 5 708 660
- HIJIN SATO ET AL: "RADIO CHANNEL CONTROL FOR PROTOTYPE ATM WIRELESS ACCESS SYSTEM" NTT REVIEW,JP,TELECOMMUNICATIONS ASSOCIATION, TOKYO, vol. 10, no. 5, 1 septembre 1998 (1998-09-01), pages 135-142, XP000784954

## Description

L'invention est relative à un système de télécommunication de type numérique dans lequel chaque terminal communique par l'intermédiaire d'une station de base ou de connexion. Elle concerne aussi un terminal et un organe de gestion.

Les systèmes de télécommunication, tels que les systèmes de téléphonie mobile ou les systèmes de télécommunication par satellite(s), sont basés sur la division d'un territoire en zones géographiques.

Dans le cas d'un système de téléphonie mobile, les zones, généralement appelées cellules, sont de dimensions variables en fonction de leur localisation, les dimensions étant faibles dans une zone urbaine et plus importantes dans une zone rurale. Dans un tel système, les terminaux, c'est-à-dire les émetteurs et récepteurs mobiles, communiquent entre eux, ou avec des terminaux d'autres réseaux, par l'intermédiaire d'une station de base prévue dans chaque zone.

Dans le cas d'un système de télécommunication par satellite(s) défilant(s) ou géostationnaire(s), la terre est, au moins dans une grande partie, divisée en zones dont chacune présente un diamètre de l'ordre de plusieurs centaines de kilomètres et les terminaux (fixes ou mobiles) communiquent par l'intermédiaire d'une station de connexion, ou station de gestion, dans cette zone, les communications étant relayées par l'intermédiaire d'équipements à bord d'un satellite.

Dans ces systèmes de télécommunication, les informations transmises sont sous forme numérique et rassemblées en cellules ou paquets correspondant, par exemple, à la norme ATM.

A chaque zone, sont affectées des ressources en communications constituées par des fréquences et/ou des codes. Lorsque des terminaux communiquent simultanément avec la station de base ou de connexion, on attribue des ressources distinctes à chacun de ces terminaux afin d'éviter un brouillage entre des terminaux émettant simultanément et afin que la station puisse déterminer l'origine des cellules ou paquets. Ces ressources comprennent, en plus de fréquences et/ou de codes, en général une position temporelle pour chaque cellule ou paquet. Il est donc nécessaire de prévoir un organe centralisé de gestion des ressources dans chaque zone, le rôle de cet organe étant d'attribuer ces ressources en communications à chaque terminal.

Si chaque terminal peut émettre et recevoir des informations de types différents, c'est-à-dire ayant des qualités de services différentes, l'organe central de gestion attribue des ressources à chaque terminal en fonction de sa qualité de service comme déjà décrit dans la demande de brevet publiée comme EP-A-0 774 848 (Xerox Corp., 21 Mai 1997). Dans le cas où un terminal peut établir simultanément plusieurs connexions, des ressources sont attribuées à chaque connexion.

Pour que l'organe central de gestion puisse connaître les besoins de chaque terminal, et éventuellement de chaque connexion, les terminaux doivent adresser à cet organe une information dite de signalisation.

Lorsque les communications sont en mode circuit, c'est-à-dire lorsque les ressources sont attribuées à l'établissement d'une connexion, la quantité d'informations à transmettre vers l'organe de gestion reste modérée.

Mais il est préférable que les ressources soient attribuées cellule par cellule ou paquet par paquet, ce qui permet d'optimiser, à chaque instant, la répartition des ressources. Dans ce cas, les informations de signalisation transmises des terminaux vers l'organe de gestion sont volumineuses. Cette signalisation est d'ailleurs d'autant plus importante que sont élevés les nombres de connexions et de qualités de service par terminal.

Par ailleurs, dans ces systèmes de télécommunication, les procédés d'attribution des ressources utilisées jusqu'à présent ne permettent pas d'isoler correctement les flux de données entre terminaux, les trafics sporadiques dans certains terminaux pouvant, par exemple, avoir un effet sur le trafic continu d'autres terminaux. En outre, ces procédés connus ne permettent pas toujours de répartir les ressources en communication de façon équitable entre les terminaux et la gigue entre les flux entrants et sortants peut être prohibitive. On rappelle ici qu'on appelle "gigue" la précision sur l'instant d'émission des flux à émettre. Si cette précision n'est pas suffisante, l'émission de certaines données sera perturbée, par exemple l'émission vidéo en temps réel.L'invention fournit un système permettant de minimiser la signalisation nécessaire pour l'attribution des ressources.

Selon un autre de ses aspects, l'invention permet d'assurer une isolation correcte entre flux provenant de terminaux différents, une équité de répartition des ressources entre terminaux et une faible gigue à l'émission.

Le système de télécommunication selon la revendication 1 de l'invention comprend, pour l'attribution des ressources en communications entre les divers terminaux, un organe de gestion qui détermine périodiquement les ressources à attribuer à chaque terminal, notamment le nombre total de cellules ou paquets à émettre par terminal ainsi que les instants de début et de fin d'émission pour chacun de ces terminaux, ces ressources étant déterminées en fonction, d'une part, du nombre total de cellules ou paquets en attente dans chaque terminal et, d'autre part, d'un coefficient de pondération affecté à chaque terminal.

Selon un mode de réalisation, chaque terminal comporte un moyen pour déterminer, à chaque autorisation d'émission reçue de l'organe de gestion, le nombre de cellules à émettre par connexion en fonction, d'une part, du nombre total de cellules ou paquets qu'il est autorisé d'émettre et, d'autre part, d'un coefficient de pondération affecté à chaque connexion, ce coefficient dépendant, de préférence, de la qualité de service affectée à chacune de ces connexions.

Ainsi, chaque terminal transmet, à l'organe de gestion chargé de la répartition des ressources, seulement le nombre total de cellules ou paquets en attente. Autrement dit, il n'est pas nécessaire que chaque terminal transmette le nombre de cellules ou paquets en attente d'émission pour chacune de ses connexions et la qualité de service affectée à chaque connexion. Chaque terminal adresse donc à l'organe de gestion une information qui peut être indépendante du nombre de connexions de ce terminal et des qualités de service affectées aux connexions.

La qualité de service affectée à chaque terminal est par exemple déterminée une fois pour toutes à l'installation de chaque connexion du terminal sous forme de paramètres de configuration. Elle peut aussi être modifiée au cours de la connexion.

Dans un mode de réalisation préféré de l'invention, les moyens de répartition des ressources entre terminaux dans l'organe de gestion et/ou les moyens de répartition de ressources entre connexions dans chaque terminal sont du type WFQ ("Weighted Fair Queuing") ou files d'attente pondérées et équitables. De tels moyens attribuent un coefficient de pondération ou une bande passante à chaque terminal. Ce mode de réalisation permet une isolation correcte entre flux, une répartition équitable et une faible gigue à l'émission.

Dans une réalisation, le coefficient de pondération affecté à chaque terminal est la somme des coefficients de pondération affectés à chacune des connexions de ce terminal.

De préférence, l'organe de gestion comporte des moyens pour attribuer à chaque terminal un nombre de cellules à émettre ainsi que les instants de début et de fin d'émission pour ce terminal.

Le coefficient de pondération affecté à chaque terminal détermine, dans une réalisation, le temps souhaité séparant deux instants successifs d'émission pour ce terminal

Le coefficient de pondération attribué à chaque connexion d'un terminal détermine avantageusement le temps séparant les instants d'émission de deux cellules successives de cette connexion.

L'invention concerne aussi un terminal pour système de télécommunication selon la revendication 7 qui comporte:
un moyen pour émettre vers un organe de gestion, chargé de l'attribution des ressources à une pluralité de terminaux, un signal représentant le nombre de cellules ou paquets en attente d'émission. Le terminal peut comporter également:
un moyen pour recevoir, de l'organe de gestion, un signal représentant le nombre de cellules ou paquets qu'il peut émettre et les instants de début et de fin d'émission et,
un moyen pour déterminer le nombre de cellules ou paquets à émettre par connexion en fonction, d'une part, du signal d'autorisation reçu et, d'autre part, de coefficients de pondération affectés à chaque connexion.

L'émission du signal représentant le nombre de cellules ou paquets à émettre est périodique ou irrégulière. Cependant, dans ce dernier cas, la période séparant deux émissions successives est de préférence inférieure à une limite prédéterminée.

L'invention se rapporte également à un organe de gestion, chargé de l'attribution des ressources en communications à une pluralité de terminaux selon la revendication 13.

D'autres caractéristiques et avantages de l'invention apparaîtront avec la description de certains de ses modes de réalisation, celle-ci étant effectuée en se référant aux dessins ci-annexés sur lesquels :
La figure 1 est un schéma d'un système de télécommunication conforme à l'invention montrant une station de gestion et un terminal,
La figure 1a est un diagramme montrant des cellules émises par des terminaux, et
La figure 2 est un schéma montrant un moyen d'attribution des ressources.

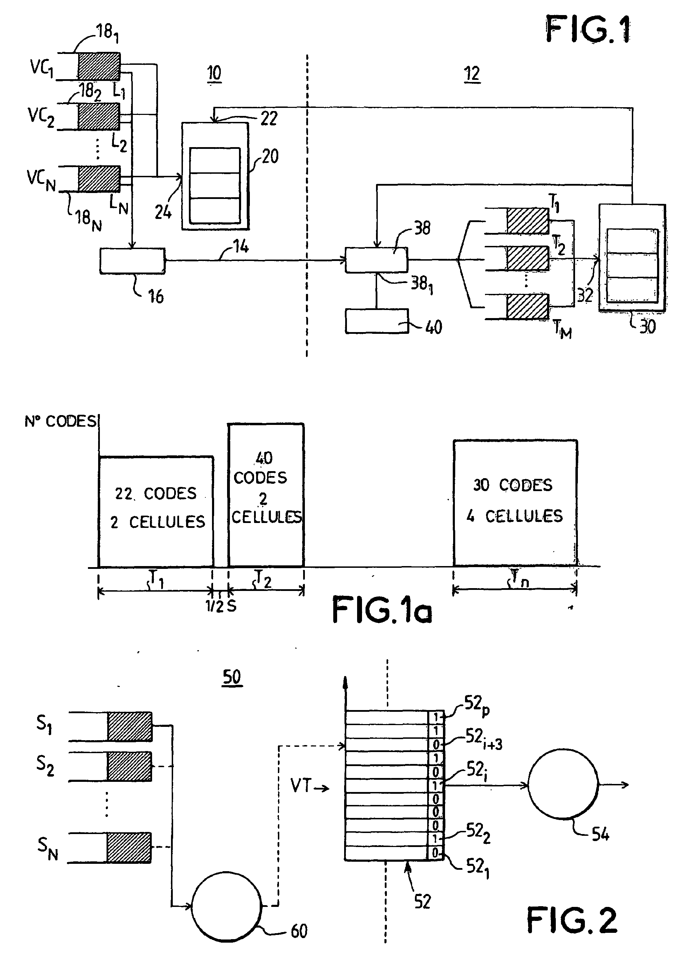

Le système de télécommunication que l'on va décrire en relation avec les figures 1 et 2, est dans l'exemple, un système de télécommunication par satellites défilants (non montrés). Dans ce système, la terre est divisée en zones dont chacune présente un diamètre de l'ordre de quelques centaines de kilomètres. Dans chaque zone, on prévoit une station de base, ou station de gestion, par exemple au centre de cette zone, et les terminaux fixes ou mobiles se trouvant dans la zone communiquent par l'intermédiaire de cette station de gestion. Les communications entre chaque terminal et la station s'effectuent par l'intermédiaire d'équipements à bord du satellite se trouvant en vue de la zone. Les satellites forment une constellation telle que, lorsqu'un satellite perd de vue la zone considérée, un autre satellite prend le relais.

Dans ce système de télécommunication, chaque terminal 10 (figure 1) est susceptible d'émettre et de recevoir selon plusieurs connexions VC₁, VC₂ ... VC_{N}. A chaque connexion est attachée une qualité de service. On prévoit, par exemple, quatre qualités de service :
La première est dite à débit constant CBR ("Constant Bit Rate") pour laquelle on assure un retard d'au maximum 100 ms (par exemple) entre l'émission et la réception. Cette qualité est assurée notamment pour les communications téléphoniques et les télécopies.
La seconde qualité, notée VBR-RT, est destinée aux communications à débit variable en temps réel et présentant des contraintes de retard moins importantes. Dans ce cas on assure un retard d'au maximum 400 ms dans l'exemple. Ce type de communication peut notamment être utilisé pour des vidéoconférences.
La troisième qualité, notée VBR-NRT, est destinée à des communications à débit variable qui ne sont pas en temps réel. Mais pour ce type de communication, on assure un débit minimal. Il permet, par exemple, la consultation de pages Internet.
La quatrième qualité de service, notée UBR ("Unspecified Bit Rate") ne garantit ni un temps de retard minimal, ni une densité minimale de communications. Ce type de communication peut être utilisé pour acheminer du courrier électronique.

L'attribution d'une qualité de service à chaque communication ou connexion permet de maximiser les ressources du réseau à transmission asynchrone. En effet, la transmission asynchrone par paquets permet, pour une transmission physique donnée, entre autres, de transmettre les communications de plus basse priorité pendant les silences des communications de plus grande priorité.

Dans l'exemple les communications émises depuis les terminaux sont de type numérique par exemple ATM. Dans un tel réseau asynchrone les données sont organisées en paquets ou cellules comprenant, dans le cas de la norme ATM, 384 bits de données et 40 bits d'en-tête. Les cellules émises depuis les terminaux sont groupées en trames de durée 32 ms chacune.

En outre, dans chaque trame, les ressources attribuées à chaque terminal sont constituées par des intervalles de temps et des codes, comme représenté sur la figure 1a. Sur ce diagramme le temps est porté en abscisse et les codes sont portés en ordonnée. Les ressources attribuées aux terminaux 1, 2 ...n sont représentées par des rectangles. Ainsi, pour le terminal 1, deux cellules ATM sont émises pendant un intervalle de temps T₁ et à ces deux cellules sont affectées 22 codes. L'intervalle T₁ correspond à un nombre déterminé de symboles.

Au second terminal, on attribue un intervalle de temps T₂, inférieur au temps T₁, deux cellules à émettre et quarante codes. L'intervalle de temps séparant la fin de l'émission par le terminal 1 du début de l'émission par le terminal 2 est d'environ un demi-temps symbole.

Le terminal de rang n émet 4 cellules pendant un intervalle de temps Tₙ et trente codes sont affectés à ce terminal de rang n.

Dans le système de télécommunication, on prévoit une station centrale de gestion 12 pour attribuer les ressources en communications à chaque connexion de chaque terminal. La station 12 se trouve dans le même lieu que la station de base ou en un emplacement différent.

L'invention prévoit, pour limiter la signalisation entre les terminaux 10 et la station centrale 12, de répartir les fonctions d'attributions des ressources entre, d'une part, cette station 12 et, d'autre part, chaque terminal.

On rappelle ici que, par "ressource", on entend les ressources temporelles ainsi que les autres ressources utilisées pour communiquer les communications pouvant être établies sur plusieurs fréquences porteuses et, dans chaque fréquence porteuse, on peut affecter un code à chaque communication ou chaque cellule ou paquet.

L'attribution des ressources est déterminée par la station 12 pour chaque terminal, indépendamment de chacune des connexions prévues dans chacun de ces terminaux, et elle s'effectue de façon périodique, paquet par paquet et non pas en mode circuit. Dans chaque terminal l'attribution des ressources s'effectue cellule par cellule.

De façon plus précise, dans l'exemple, la station centrale 12 détermine de façon périodique pour chaque terminal un nombre total de cellules que le terminal est autorisé à émettre et les instants de début et de fin d'émission pour chacun de ces terminaux. La période d'attribution des ressources est suffisamment courte pour permettre que les ressources soient attribuées cellule par cellule dans chaque connexion. Elle est de 10,66 ms dans l'exemple.

Ainsi, comme décrit avec la figure 1a, la station 12 donne une autorisation d'émission de deux cellules pour le terminal de rang 1, une autorisation pour deux cellules pour le terminal de rang 2 et une autorisation pour quatre cellules pour le terminal de rang n. En outre, la station 12 détermine les instants de débuts et fins d'émission pour les groupes de cellules émis par chaque terminal.

Le nombre de cellules attribué à chaque terminal dépend, d'une part, d'un coefficient de pondération attribué à chaque terminal et, d'autre part, du nombre total de cellules en attente d'émission dans chacun de ces terminaux. Le coefficient de pondération attribué à chacun des terminaux dépend de la qualité de service globale qui est attribuée à ce terminal.

On considère l'exemple de deux terminaux qui doivent chacun transmettre 30 cellules alors que l'émission d'un total de 30 cellules est autorisée pour ces deux terminaux. Si le premier est terminal a un "poids" de 144 Kbits/s et le second un "poids" de 36 Kbits/s le premier terminal pourra émettre 24 cellules et le second 6 cellules.

On voit ainsi que le poids, ou le coefficient de pondération, correspond de préférence à un débit ou à son inverse.

Chaque terminal comporte une voie de signalisation 14 qui émet, vers la station 12, un signal représentant le nombre total de cellules en attente dans ce terminal.

On prévoit donc, dans le terminal, un moyen, représenté par le bloc 16, qui détermine l'état de remplissage de chacune des files d'attentes des connexions Vc₁ VC₂ ... VC_{N}, c'est à dire le nombre L₁, L₂ ... L_{N} de cellules en attente dans chacune de ces files, respectivement 18₁ 18₂ ... 18_{N}, et ce bloc 16 effectue la somme des valeurs L₁, L₂ ... L_{N}. C'est ce signal somme qui est transmis, sur la voie de signalisation 14, vers la station 12.

Dans l'exemple, le coefficient de pondération attribué à chaque terminal t₁, t₂ ... tₘ est égal à la somme des coefficients de pondération de chacune des connexions de ce terminal.

Dans chaque terminal, l'attribution des ressources est effectuée par un dispositif 20 comportant une entrée 22 recevant de la station 12 une information sur les ressources globalement attribuées au terminal 10, à savoir le nombre de cellules à émettre et les instants de début et de fin d'émission.

Ce dispositif 20 comprend une autre entrée 24 recevant une information sur les cellules en attente de chacune des connexions VC_{1,} VC₂ ... VC_{N} dans les files respectives 18_{1,} 18₂ ... 18_{N}.

Le dispositif 20 détermine les cellules qui seront émises à l'aide d'un procédé de type WFQ qui attribue à chaque connexion VC₁, VC₂ ... VC_{N} un coefficient de pondération qui est fonction de la qualité de service de chacune de ces connexions. De façon plus précise, ce coefficient détermine la bande passante attribuée à chaque connexion ou l'écart temporel entre les temps d'émissions de deux cellules d'une même connexion. Par exemple, si le coefficient attribué à une connexion est rᵢ, le temps séparant l'émission de deux cellules successives de cette même connexion sera d'environ 1/rᵢ.

Un exemple de dispositif utilisant le procédé WFQ sera décrit plus loin en relation avec la figure 2.

La station 12 comporte également un dispositif 30 du type WFQ pour déterminer les ressources distribuées à chaque terminal. Bien que les dispositifs 20 (pour le terminal) et 30 (pour l'organe de gestion) soient du même type, on peut cependant noter que la complexité du dispositif 30 est nettement plus importante que la complexité du dispositif 20. En effet, le dispositif 30 doit, en général, gérer plusieurs milliers de terminaux tandis que le dispositif 20 gère un nombre beaucoup plus limité de connexions, par exemple quelques unités.

Ainsi, le dispositif 20 peut être réalisé sous la forme d'un programme implanté dans un microprocesseur, ce programme occupant une place en mémoire relativement limitée. Autrement dit, le dispositif 20 entraîne un surcoût négligeable pour la réalisation de chaque terminal.

Comme montré sur la figure 1, le dispositif 30 comporte une entrée 32 recevant les informations relatives aux états des files d'attente dans chacun des terminaux. Dans le schéma de la figure 1, ces états sont fournis par des mémoires tampons T₁, T₂ ... T_{M}, une par terminal, qui sont remplies par les données reçues des divers terminaux par les voies de signalisation 14. Avant transmission aux mémoires tampon T₁, T₂ ... T_{M}, ces données sont reçues dans un bloc 38.

Le bloc 38 comporte une entrée 38₁ recevant des signaux de requête émis par un générateur 40 de requêtes automatiques qui commande le multiplexage des données du bloc 38 vers les mémoires tampons T₁, T₂ ... T_{M}.

On se réfère maintenant à la figure 2 qui représente, un dispositif WFQ 50 de commande d'émission de cellules ou paquets permettant d'expliquer le principe de fonctionnement du dispositif 20 de chaque terminal et/ou du dispositif 30 dans chaque station.

Pour simplifier l'explication, on décrira le fonctionnement pour un dispositif WFQ de terminal.

Ce dispositif 50 est destiné à commander l'émission de cellules (ou paquets) venant de N flux S₁, S₂ ... S_{N} de cellules à chacun desquels est affecté un coefficient respectif r₁, r₂ ... r_{N}, fonction de la qualité de service affectée à chaque flux.

Le dispositif 50 comporte un échéancier 52 se présentant sous la forme d'une mémoire circulaire comprenant des registres 52ᵢ ... 52ₙ qui sont explorés en séquence. Chaque registre correspond à un intervalle temporel représentant le temps nécessaire pour transmettre une cellule sur la liaison de sortie, c'est-à-dire au produit du débit de la liaison par la taille de la cellule. Dans l'exemple, le temps courant VT correspond au registre 52ᵢ. Ce dernier est donc exploré le premier. Ensuite, c'est le registre 52ᵢ₊₁ qui est exploré et ainsi de suite jusqu'au registre 52ₚ. Après lecture du registre 52ₚ, on revient au registre 52₁, et ainsi de suite.

Chacun des registres contient une ou plusieurs cellules, ou l'adresse de cette ou ces cellules, à émettre au temps correspondant à la position du registre. En outre, le registre contient un bit, 0 ou 1, indiquant si ce registre est rempli ou non (par une adresse ou plusieurs adresses, ou une cellule ou plusieurs cellules).

Quand un pointeur d'exploration atteint le registre 52ᵢ correspondant à l'heure courante VT les cellules correspondant à ce registre sont introduites dans une file d'attente 54, par exemple une mémoire tampon du type FIFO. Ces cellules sont ensuite émises de façon séquentielle.

À la sortie de la mémoire tampon 54, quand une cellule aᵢ provenant d'un flux Sᵢ à été émise depuis la mémoire 54 vers la station 12, la première cellule en attente de ce flux Sᵢ est introduite dans un registre, par exemple le registre 52ᵢ₊₃.

Pour déterminer le registre dans lequel chaque cellule (ou son adresse) doit être introduite, c'est à dire le moment de son émission, on affecte à chacune de ces cellules une "étiquette" temporelle à l'aide d'un dispositif 60. Pour respecter la bande passante attribuée à chaque connexion, l'heure désirée de réémission de chaque cellule est l'heure tᵢ d'émission, par le registre 54, de la cellule précédente aᵢ, à laquelle on ajoute la quantité 1/rᵢ, afin que cette cellule suivante de la même connexion soit émise au temps tᵢ+1/rᵢ. Dans ces conditions, la cellule suivante (ou son adresse) du registre Sᵢ vient remplir un registre vide ou un registre déjà rempli.

Si l'étiquette temporelle attribuée à la cellule suivante est inscrite à un moment ultérieur à celui qui correspond à la somme tᵢ+1/rᵢ, alors l'étiquette temporelle est VT (le temps courant de l'échéancier 52). Ainsi la cellule sera émise de façon quasi immédiate. Cette situation intervient lorsque la cellule a subi un retard en raison de noeuds précédents dans le réseau. Dans ces conditions si la cellule est en retard par rapport à son heure souhaitée de réémission, cette cellule sera émise immédiatement, c'est-à-dire placée au temps V_{T}, afin de ne pas amplifier le retard.

## Revendications

1. Système de télécommunication dans lequel une pluralité de terminaux (10) communique avec une station de base ou de connexion et un organe de gestion (12) détermine l'attribution des ressources pour les communications de chaque terminal (10) vers la station de connexion, et les communications s'effectuant par cellules ou paquets, l'attribution des ressources étant déterminée cellule par cellule, ou paquet par paquet, dans chaque connexion, au moins certains des terminaux comportant une pluralité de connexions, l'organe de gestion (12) comporte des moyens (30) pour attribuer des ressources en communications à chacun des terminaux (10) en fonction, d'une part, du nombre total de cellules ou paquets en attente dans chaque terminal (10) et, d'autre part, d'un coefficient de pondération affecté à chacun des terminaux (10), et, **caractérisé en ce que** chaque terminal (10) comporte des moyens (20) pour affecter les ressources à chaque connexion en fonction, d'une part, des ressources d'ensemble qui lui sont attribuées par l'organe de gestion (12) et, d'autre part, d'un coefficient de pondération affecté à chacune des connexions de ce terminal (10).

2. Système selon la revendication 1, **caractérisé en ce que** le coefficient de pondération affecté à chacune des connexions dans un terminal (10) dépend de la qualité de service de cette connexion.

3. Système selon la revendication 1 ou 2, **caractérisé en ce que** le coefficient de pondération affecté à chaque terminal (10) est la somme des coefficients de pondération affectés à chacune des connexions de ce terminal (10).

4. Système selon l'une quelconque des revendications 1 à 3, **caractérisé en ce que** l'organe de gestion (12) comporte des moyens pour attribuer à chaque terminal (10) un nombre de cellules à émettre ainsi que les instants de début et de fin d'émission pour ce terminal (10).

5. Système selon l'une quelconque des revendications précédentes, **caractérisé en ce que** le coefficient de pondération affecté à chaque terminal (10) détermine le temps souhaité séparant deux instants successifs d'émission pour ce terminal (10).

6. Système selon l'une quelconque des revendications précédentes, **caractérisé en ce que** le coefficient de pondération attribué à chaque connexion d'un terminal (10) détermine le temps séparant les instants d'émission de deux cellules successives de cette connexion.

7. Terminal pour système de télécommunication dans lequel les communications s'effectuent par cellules ou paquets, ce terminal (10) comportant une pluralité de connexions, l'attribution des ressources étant déterminée cellule par cellule, ou paquet par paquet, ce terminal comprenant :
un moyen pour émettre, vers un organe de gestion (12), chargé de l'attribution des ressources à une pluralité de terminaux (10), un signal représentant le nombre total de cellules ou paquets en attente d'émission,
un moyen pour recevoir périodiquement de l'organe de gestion (12) un signal représentant les ressources en communications attribuées à ce terminal (10),
et **caractérisé en ce qu'**il comprend un moyen pour affecter les ressources à chaque connexion en fonction, d'une part, des ressources d'ensemble qui lui sont attribuées et, d'autre part, d'un coefficient de pondération affecté à chacune des connexions de ce terminal (10).

8. Terminal selon la revendication 7, **caractérisé en que** le signal d'attribution des ressources qui est reçu de l'organe de gestion (12) représente un nombre de cellules à émettre ainsi que les instants de début et fin d'émission pour le groupe des cellules à émettre, et en ce que le moyen pour affecter les ressources à chaque connexion est adapté pour sélectionner les connexions qui pourront émettre une cellule.

9. Terminal selon la revendication 7 ou 8, **caractérisé en que** le signal d'attribution des ressources reçu de l'organe de gestion (12) représente un nombre de cellules à émettre ainsi que les instants de début et fin d'émission pour le groupe de cellules à émettre, et en ce que le moyen pour affecter des ressources à chaque connexion comporte un moyen pour déterminer la durée d'émission de chaque cellule.

10. Terminal selon l'une quelconque des revendications 7 à 9, **caractérisé en que** le coefficient de pondération affecté à chacune des connexions dépend de la qualité de service de chaque connexion.

11. Terminal selon l'une quelconque des revendications 7 à 10, **caractérisé en ce qu'**il comporte des moyens pour que deux cellules successives d'une même connexion soient émises en des instants séparés par une durée fonction du coefficient de pondération affecté à cette connexion.

12. Terminal selon la revendication 11, **caractérisé en ce que** la durée séparant l'émission de deux cellules successives d'une même connexion est fonction de l'inverse du coefficient de pondération affecté à la connexion correspondante.

13. Organe de gestion destiné à l'attribution des ressources en communications à une pluralité de terminaux (10) d'un système de télécommunication dans lequel une pluralité de terminaux (10) communique avec une station de base ou de connexion et dans lequel les communications s'effectuent par cellules ou paquets, au moins certains des terminaux comportant une pluralité de connexions,
les ressources étant attribuées cellule par cellule, ou paquet par paquet, l'organe de gestion (12) comportant:
un moyen pour recevoir de chaque terminal (10) un signal représentant le nombre total de cellules ou paquets en attente d'émission,
un moyen pour attribuer, en fonction de ce nombre en attente et d'un coefficient de pondération affecté à chaque terminal (10), les ressources en communications pour ce terminal (10), et
des moyens pour transmettre des messages d'attribution de ressources vers chacun des terminaux (10),
l'organe de gestion étant **caractérisé en ce que** le coefficient de pondération affecté à chaque terminal (10) est la somme des coefficients de pondération affectés à chacune des connexions de ce terminal (10)

14. Organe de gestion selon la revendication 13, **caractérisé en ce que** le moyen pour attribuer des ressources à chaque terminal (10) comporte un moyen pour déterminer le nombre de cellules ou paquets à émettre par terminal ainsi que l'instant de début et de fin d'émission pour chacun des terminaux.

15. Organe de gestion selon la revendication 13 ou 14, **caractérisé en ce qu'**il comprend un moyen pour que le coefficient de pondération affecté à chaque terminal (10) détermine le temps séparant deux instants successifs d'émission pour ce terminal (10).

## Claims

1. Telecommunication system in which a plurality of terminals (10) communicate with a base station or a connection station and a management unit (12) determines the allocation of resources for calls from each terminal (10) to said connection station, at least some of the terminals include a plurality of connections, the calls are effected by means of cells or packets, the allocation of resources is determined cell by cell or pocket by packet in each connection, said management unit (12) includes means (30) for allocating communication resources to each terminal (10) according to the total number of cells or packets waiting in each terminal (10), on the one hand, and a weighting coefficient allocated to each terminal (10), on the other hand, and **characterised in that** each terminal (10) includes means (20) for allocating resources to each connection according to the overall resources allocated to it by said management unit (12) ), on the one hand, and a weighting coefficient allocated to each connection of the terminal (10) on the other hand.

2. System according to claim 1, **characterised in that** the weighting coefficient allocated to each connection in a terminal (10) depends on the quality of service of the connection.

3. System according to claim 1 or 2, **characterised in that** the weighting coefficient allocated to each terminal (10) is the sum of weighting coefficients allocated to each connection of the terminal (10).

4. System according to any of claims 1 to 3, **characterised in that** the management unit (12) includes means for allocating to each terminal (10) a number of cells to be transmitted and the start and end of transmission times for the terminal (10).

5. System according to any preceding claim, **characterised in that** the weighting coefficient allocated to each terminal (10) determines the required time period between successive transmission times for the terminal (10).

6. System according to any preceding claim, **characterised in that** the weighting coefficient allocated to each connection of a terminal (10) determines the time period between the transmission times of two successive cells of the connection.

7. Terminal for a telecommunication system in which calls are effected by cells or packets, the terminal (10) includes a plurality of connections, the allocation of resources is determined cell by cell or packet by packet, the terminal includes:
means for transmitting to a management unit (12) responsible for allocating resources to a plurality of terminals (10) a signal representing the total number of cells or packets awaiting transmission,
means for periodically receiving from the management unit (12) a signal representing the communication resources allocated to the terminal (10),
and **characterised in that** it includes means for allocating the resources to each connection according to the overall resources that are allocated to it and a weighting coefficient allocated to each connection of the terminal (10).

8. Terminal according to claim 7, **characterised in that** the resource allocation signal that is received from the management unit (12) represents a number of cells to be transmitted and the start and end of transmission times for the group of cells to be transmitted, and **in that** the means for allocating resources to each connection is adapted to select the connections that will be able to transmit a cell.

9. Terminal according to claim 7 or 8, **characterised in that** the resource allocation signal received from the management unit (12) represents a number of cells to be transmitted and the start and end of transmission times for the group of cells to be transmitted, and **in that** the means for allocating resources to each connection include means for determining the transmission time of each cell.

10. Terminal according to any of claims 7 to 9, **characterised in that** said weighting coefficient allocated to each connection depends on the quality of service of that connection.

11. Terminal according to any of claims 7 to 10, **characterised in that** it includes means for transmitting two successive cells of the some connection at times separated by a time period that depends on the weighting coefficient allocated to the connection.

12. Terminal according to claim 11, **characterised in that** the time period between the transmission of two successive cells of the same connection depends on the reciprocal of the weighting coefficient allocated to the corresponding connection.

13. Management unit for allocating communication resources to a plurality of terminals (10) of a telecommunication system in which a plurality of terminals (10) communicate with a base station or connection station and in which calls are effected by cells or by packets, at least some of the terminals include a plurality of connections, the resources are allocated cell by cell or packet by packet, and the management unit (12) includes means for receiving from each terminal (10) a signal representing the total number of cells or packets awaiting transmission, means for allocating the communication resources for the terminal (10) according to the number of waiting cells or packets and a weighting coefficient allocated to each terminal (10), and means for transmitting resource allocation messages to each terminal (10), the management unit being **characterised in that** the weighting coefficient allocated to each terminal (10) is the sum of the weighting coefficients allocated to each connection of the terminal (10).

14. Management unit according to claim 13, **characterised in that** the means for allocating resources to each terminal (10) include means for determining the number of cells or packets to be transmitted by each terminal and the start and end of transmission times for each terminal (10).

15. Management unit according to claim 13 or 14, **characterised in that** it comprises means so that the weighting coefficient allocated to each terminal (10) determines the time period between successive transmission times for the terminal (10).

## Patentansprüche

1. Telekommunikationssystem, in dem eine Vielzahl an Endgeräten (10) mit einer Basis- oder Verbindungsstation kommuniziert, und ein Verwaltungselement (12) die Zuweisung der Ressourcen für die Kommunikationen jedes Endgeräts (10) mit der Verbindungsstation festlegt, und die Kommunikationen anhand von Zellen oder Paketen durchgeführt werden, wobei die Zuweisung der Ressourcen für jede Verbindung zellen- oder paketweise festgelegt wird, und zumindest bestimmte Endgeräte eine Vielzahl an Verbindungen umfassen, das Verwaltungeelement (12) Mittel (30) umfasst, die der Zuweisung von Kommunikations-Ressourcen an jedes Endgerät (10) dienen, einerseits entsprechend der Gesamtanzahl an Zellen oder Paketen, die sich in jedem Endgerät (10) in Warteposition befinden, und andererseits entsprechend einem Gewichtungsfaktor, der jedem Endgerät (10) zugeordnet ist, und **dadurch gekennzeichnet, dass** jedes Endgerät (10) Mittel (20) umfasst, die der Zuweisung der Ressourcen für jede Verbindung dienen, einerseits entsprechend den Systemressourcen, die ihm vom Verwaltungselement (12) zugewiesen werden, und andererseits entsprechend einem Gewichtungsfaktor, der jeder Verbindung dieses Endgeräts (10) zugeordnet wird.

2. System gemäß Anspruch 1, **dadurch gekennzeichnet, dass** der Gewichtungsfaktor, der jeder Verbindung eines Endgeräts (10) zugeordnet wird, von der Dienstgüte dieser Verbindung abhängt.

3. System gemäß Anspruch 1 oder 2, **dadurch gekennzeichnet, dass** der Gewichtungsfaktor, der jedem Endgerät (10) zugeordnet wird, der Summe der Gewichtungsfaktoren entspricht, die jeweils den Verbindungen dieses Endgeräts (10) zugeordnet werden.

4. System gemäß einem der Ansprüche 1 bis 3, **dadurch gekennzeichnet, dass** das Verwaltungaelement (12) Mittel
umfasst, die dazu dienen, jedem Endgerät (10) eine Anzahl zu versendender Zellen sowie jeweils den Zeitpunkt für den Beginn und das Ende des Sendevorgangs für dieses Endgerät (10) zuzuweisen.

5. System gemäß einem der vorgenannten Ansprüche, **dadurch gekennzeichnet, dass** der jedem Endgerät (10) zugeordnete Gewichtungsfaktor die gewünschte Zeit festlegt, die zwischen zwei aufeinander folgenden Sendezeitpunkten für dieses Endgerät (10) liegen soll.

6. System gemäß einem der vorgenannten Ansprüche, **dadurch gekennzeichnet, dass** der Gewichtungsfaktor, der jeder Verbindung eines Endgeräts (10) zugewiesen wird, die Zeit festlegt, die zwischen den Sendezeitpunkten zweier aufeinander folgenden Zellen innerhalb dieser Verbindung liegt.

7. Endgerät für ein Telekommunikationssystem, in dem die Kommunikationen anhand von Zellen oder Paketen durchgeführt werden, wobei dieses Endgerät (10) eine Vielzahl an Verbindungen umfasst und die Zuweisung der Ressourcen zellen- oder paketweise erfolgt, wobei dieses Endgerät Folgendes umfasst:
Ein Mittel, das dazu dient, dem Verwaltungselement (12), das die Zuweisung der Ressourcen an eine Vielzahl von Endgeräten (10) übernimmt, ein Signal zu senden, das die Gesamtanzahl an Zellen oder Paketen mitteilt, die sich in Warteposition befinden,
Ein Mittel, das dem regelmäßigen Empfang eines Signals dient, das von dem Verwaltungselement (12) gesendet wird und die diesem Endgerät (10) zugewiesenen Kommunikations-Ressvurcen mitteilt, und **dadurch gekennzeichnet, dass** es ein Mittel umfasst, das der Zuweisung der Ressourcen für jede Verbindung dient, einerseits entsprechend den Systemressourcen, die ihm zugewiesen werden, und andererseits entsprechend einem Gewichtungsfaktor, der jeder Verbindung dieses Endgeräts (10) zugeordnet wird.

8. Endgerät gemäß Anspruch 7, **dadurch gekennzeichnet, dass** das von dem Verwaltungselement (12) empfangene Signal für die Ressourcenzuweisung eine Anzahl an zu sendenden Zellen sowie die Zeitpunkte für den Beginn und das Ende des Sendevorgangs der zu sendenden Zellengruppen mitteilt, und **dadurch gekennzeichnet, dass** das Mittel, das der Zuweisung der Ressourcen an jede Verbindung dient, für die Auswahl der Verbindungen ausgelegt ist, die in der Lage sind, eine Zelle zu senden.

9. Endgerät gemäß Anspruch 7 oder 8, **dadurch gekennzeichnet, dass** das von dem verwaltungselement (12) empfangene Signal für die Ressourcenzuweisung eine Anzahl an zu sendenden Zellen sowie die Zeitpunkte für den Beginn und das Ende des Sendevorgangs der zu sendenden Zellengruppen mitteilt, und **dadurch gekennzeichnet, dass** das Mittel, das der Zuweisung der Ressourcen für jede Verbindung dient, ein Mittel zur Bestimmung der Sendedauer für jede Zelle umfasst.

10. Endgerät gemäß einem der Ansprüche 7 bis 9, **dadurch gekennzeichnet, dass** der jeder Verbindung zugeordnete Gewichtungsfaktor von der Dienstgüte jeder Verbindung abhängt.

11. Endgerät gemäß einem der Ansprüche 7 bis 10, **dadurch gekennzeichnet, dass** es Mittel umfasst, die dazu dienen, zwei aufeinander folgenden Zellen einer selben Verbindung zu Zeitpunkten zu senden, zwischen denen eine Zeitspanne liegt, die von dem dieser verbindung zugeordneten Gewichtungsfaktor bestimmt wird.

12. Endgerät gemäß Anspruch 11, **dadurch gekennzeichnet, dass** die Zeitspanne, die zwischen dem Senden von zwei aufeinander folgende Zellen einer selben Verbindung liegt, von dem Gegenwert des Gewichtungsfaktors bestimmt wird, der der entsprechenden Verbindung zugeordnet ist.

13. Verwaltungselement, das der Zuweisung von Kommunikations-Ressourcen für eine Vielzahl von Endgeräten (10) eines Telekommunikationssystems dient, in dem eine Vielzahl von Endgeräten (10) mit einer Basis- oder Verbindungsstation komnuniziert, und in dem die Kommunikationen anhand von Zellen oder Paketen durchgeführt werden, wobei zumindest bestimmte Endgeräte eine Vielzahl an Verbindungen umfassen,
die Ressourcen zellen- oder paketweise zugewiesen werden,
und das Verwaltungselement (12) Folgendes umfasst:
Ein Mittel zum Empfang eines Signals von jedem Endgerät (10), das die Gesamtanzahl an Zellen oder Paketen mitteilt, die sich in warteposition befinden,
Ein Mittel, das dazu dient, entsprechend dieser Anzahl in Warteposition und entsprechend dem jedem Endgerät (10) zugeordneten Gewichtungsfaktor die Kommunikations-Ressourcen für dieses Endgerät (10) zuzuweisen; und
Mittel zur Übertragung der Ressourcen-Zuweisungsmeldung an jedes Endgerät (10);
das Verwaltungselement ist **dadurch gekennzeichnet, dass** der jedem Endgerät (10) zugeordnete Gewichtungsfaktor gleich der Summe der Gewichtungsfaktoren ist, die jeder Verbindung dieses Endgeräts (10) zugeordnet sind.

14. Verwaltungselement gemäß Anspruch 13, **dadurch gekennzeichnet, dass** das Mittel zur Zuweisung der Ressourcen für jedes Endgerät (10) ein Mittel umfasst, das der Ermittlung der Anzahl an Zellen oder Paketen dient, die pro Endgerät zu übertragen sind, sowie des Zeitpunkts für den Beginn und das Ende des Sendevorgangs für jedes dieser Endgeräte (10).

15. Verwaltungselement gemäß Anspruch 13 oder 14, **dadurch gekennzeichnet, dass** es ein Mittel umfasst, das gewährleistet, dass der jedem Endgerät (10) zugeordnete Gewichtungsfaktor die Zeit festlegt, die zwischen den Sendezeitpunkten zweier aufeinander folgenden Zellen für dieses Endgerät (10) liegt.
